(19) **Europäisches Patentamt / European Patent Office / Office européen des brevets**

(11) **EP 4 667 886 A2**

(12) **EUROPEAN PATENT APPLICATION**

(43) Date of publication:
24.12.2025 Bulletin 2025/52

(51) International Patent Classification (IPC):
*G01K 7/42* (2006.01)    *G01K 3/04* (2006.01)
*G01K 1/024* (2021.01)    *G01K 3/00* (2006.01)

(21) Application number: 25182067.6

(22) Date of filing: **11.06.2025**

(52) Cooperative Patent Classification (CPC):
**G01K 1/024; G01K 3/005; G01K 3/04; G01K 7/42**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **18.06.2024 SE 2450668**

(71) Applicant: **InsulinSaver AB**
**472 91 Stillingsön (SE)**

(72) Inventors:
• **DAHL, Hanna**
**472 91 Stillingsön (SE)**
• **DAHL, Oskar**
**423 71 Säve (SE)**

(74) Representative: **Zacco Sweden AB**
**P.O. Box 5581**
**Löjtnantsgatan 21**
**114 85 Stockholm (SE)**

(54) **A METHOD AND A DEVICE FOR MONITORING PHARMACEUTICALS**

(57) The present invention relates to a method for temperature monitoring of at least one packaged pharmaceutical , the method comprising: measuring an ambient temperature, T; calculating an estimated temperature T' for each packaged pharmaceutical using a thermal model, wherein the thermal model calculates the estimated temperature T' for each packaged pharmaceutical based on physical and thermal properties of the pharmaceutical and and a package of the pharmaceutical , and the measured ambient temperature T; determining, for each of the at least one packaged pharmaceutical, if the estimated temperature T' of the packaged pharmaceutical is within an allowed temperature range of the packaged pharmaceutical; and generating an alarm signal in response to determining that the estimated temperature T' of one or more of the at least one packaged pharmaceuticals is outside its allowed temperature range.

100

wait at least a predetermined time — S50

measuring an ambient temperature, T — S10

calculating an estimated temperature T' for each packaged pharmaceutical by a thermal model — S20

determining an allowed temperature interval for each of the pharmaceuticals — S60

determining if any one of the at least one packaged pharmaceutical is outside its allowed temperature interval — S30

generating an alarm signal, in response to determining that one of the at least one packaged pharmaceuticals is outside its allowed temperature interval — S40

Fig. 1

Processed by Luminess, 75001 PARIS (FR)

EP 4 667 886 A2

**Description**

## TECHNICAL FIELD

The present disclosure generally relates to the field of temperature monitoring of pharmaceuticals and more specifically to the field of temperature monitoring of packaged pharmaceuticals.

## BACKGROUND

Many patients rely upon having easy access to necessary pharmaceuticals in order to keep diseases under control. For example, a diabetic person may need to have insulin readily available at all times. This means that the insulin packages may be carried by the diabetic person during transportation. The insulin package often requires to be stored within a temperature range in order to be functional and if the package has been subjected to a temperature outside the allowed temperature range it might be damaged and the pharmaceutical needs to be discarded.

In an attempt to increase control of the temperature within the container holding the insulin packages it has been demonstrated that a temperature sensor arranged in the container with an alarm set to trigger when the temperature is outside an allowed range, provides the user with an increased control.

However, there is still a need for an improved method and device for monitoring pharmaceuticals. Especially, a mobile solution would provide a diabetic person with increased freedom and independence.

## SUMMARY

An object of the present disclosure is to provide a method and a device which seeks to mitigate, alleviate, or eliminate one or more of the above-identified deficiencies in the art and disadvantages singly or in any combination and to provide an improved monitoring method and a device therefor.

This object is obtained by a method for temperature monitoring of at least one packaged pharmaceutical. The method comprising measuring an ambient temperature, T. Calculating an estimated temperature T' for each packaged pharmaceutical using a thermal model. The thermal model calculates the estimated temperature T' for each packaged pharmaceutical based on physical and thermal properties of the pharmaceutical and a package of the pharmaceutical, and the measured ambient temperature T. Determining, for each of the at least one packaged pharmaceutical, if the estimated temperature T' of the packaged pharmaceutical is within an allowed temperature range of the packaged pharmaceutical; and generating an alarm signal in response to determining that the estimated temperature T' of one or more of the at least one packaged pharmaceuticals is outside its allowed temperature range.

According to an aspect, the method further comprises, determining an allowed temperature range for each of the pharmaceutical.

According to an aspect, the method further comprises, an initial step of waiting a predetermined time before measuring the ambient temperature T.

According to an aspect, the physical properties comprises: a mass of the pharmaceutical, M1, and a mass of its package, M2, and dimensions of the package, and the thermal properties comprises specific heat capacity for the pharmaceutical, CP1, and its package, CP2, and convective heat transfer coefficient, H.

According to an aspect, the thermal model calculates the estimated temperature $T_i'$ as:

$$T_i' = T_{i-1}' + (H * A * (T - T_{i-1}')) / ((M2 * CP2) + (M1 * CP1))) * dt,$$

where dt is the elapsed time from the last calculation of the estimated temperature $T_{i-1}'$.

According to an aspect, the method further comprises, receiving the thermal and/or the physical properties from a server.

The object is also obtained by a monitoring device for temperature monitoring of at least one packaged pharmaceutical . The monitoring device comprises a temperature sensor operable to measure an ambient temperature, T,, an alarm generator for issuing an alarm in response to receiving an alarm signal. The monitoring device further comprises a signal processing apparatus operable to: calculate an estimated temperature T' for each packaged pharmaceutical by a thermal model. The thermal model calculates the estimated temperature T' for each packaged pharmaceutical based on physical and thermal properties of the corresponding pharmaceutical and its package and the measured ambient temperature, determine if any one of the at least one packaged pharmaceutical is outside its allowed temperature interval based on the corresponding calculated estimated temperature T', and generating the alarm signal in response to determining that one of the at least one packaged pharmaceuticals is outside its allowed temperature interval.

According to an aspect, the signal processing apparatus further is configured to determine an allowed temperature interval for each of the pharmaceuticals.

According to an aspect, the signal processing apparatus further is configured to wait at least a predetermined time after start before measuring the ambient temperature.

According to an aspect, the physical properties comprises: mass of the pharmaceutical, M1, and the mass of its package, M2, and dimensions and area of the package, A, and wherein the thermal properties comprises: specific heat capacity for the pharmaceutical, CP1, and its package, CP2, and convective heat transfer coefficient, H.

According to an aspect, the thermal model calculates the estimated temperature $T_i'$ as:

$$T_i' = T_{i-1}' + (H * A * (T - T_{i-1}') / ((M2 * CP2) + (M1 * CP1))) * dt$$

Where dt is the elapsed time from the last calculation of the estimated temperature $T_{i-1}'$.

According to an aspect, the monitoring device further comprises, a communication circuit, wherein the thermal and/or the physical properties are received from a wireless network via said communication circuit.

The object is also obtained by a computer program comprising computer-readable instructions which, when executed by a processor, cause the processor to perform the method according to aspects herein.

The object is also obtained by a computer readable storage medium, wherein the computer readable storage medium stores the computer program according to embodiments herein.

Further objects and advantages may be found in the detailed description.

**BRIEF DESCRIPTION OF THE DRAWINGS**

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.

Figure 1 is a schematic block diagram of a monitoring device according to an embodiment;

Figure 2 is a schematic drawing of a container containing pharmaceutical packages and a monitoring device according to an embodiment;

Figure 3 is schematic illustration of an embodiment of the present invention in use; and

Figure 4 is a flow diagram illustrating a method according to an embodiment.

**DETAILED DESCRIPTION**

Aspects of the present disclosure will be described more fully hereinafter with reference to the accompanying drawings. The apparatus and method disclosed herein can, however, be realized in many different forms and should not be construed as being limited to the aspects set forth herein. Like numbers in the drawings refer to like elements throughout.

The terminology used herein is for the purpose of describing particular aspects of the disclosure only, and is not intended to limit the invention. As used herein, the singular forms "a", "an" and "the" are intended to include the plural forms as well, unless the context clearly indicates otherwise.

In this disclosure the term 'packaged pharmaceutical' should be interpreted as a pharmaceutical in a package, for example an insulin vial, or an insulin cartridge for an insulin pen.

In this disclosure the term 'container' should be interpreted as a closed confined space for storing a packaged pharmaceutical, for example a purse or a bag.

Some of the example embodiments presented herein are directed towards a method for temperature monitoring of at least one packaged pharmaceutical. As part of the development of the example embodiments presented herein, a problem will first be identified and discussed.

The present inventors realized that when a pharmaceutical package is subjected to a temperature change it takes some time for the pharmaceutical to change its temperature due to the thermal properties of the pharmaceutical and the package. This means that a temperature sensor that monitors the temperature of the surroundings of the packaged pharmaceutical is not sufficient, and a temperature sensor arranged to sense the temperature inside the package is not feasible for many reasons.

The present inventors realized that these problems may be minimized or even eliminated by a method for temperature monitoring of at least one packaged pharmaceutical , the method comprising: measuring an ambient temperature, T,, calculating an estimated temperature T' for each packaged pharmaceutical using a thermal model. The thermal model calculates the estimated temperature T' for each packaged pharmaceutical based on physical and thermal properties of the pharmaceutical and and a package of the pharmaceutical , and the measured ambient temperature T, determining, for each of the at least one packaged pharmaceutical, if the estimated temperature T' of the packaged pharmaceutical is within an allowed temperature range of the packaged pharmaceutical, and generating an alarm signal in response to determining that the estimated temperature T' of one or more of the at least one packaged pharmaceuticals is outside its allowed temperature range.

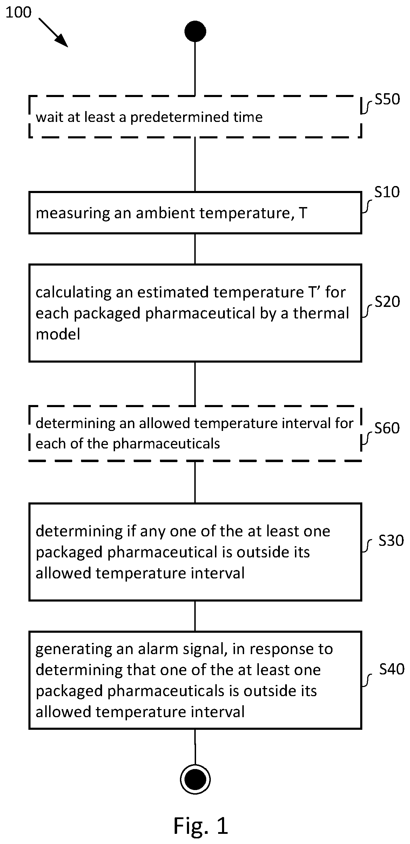

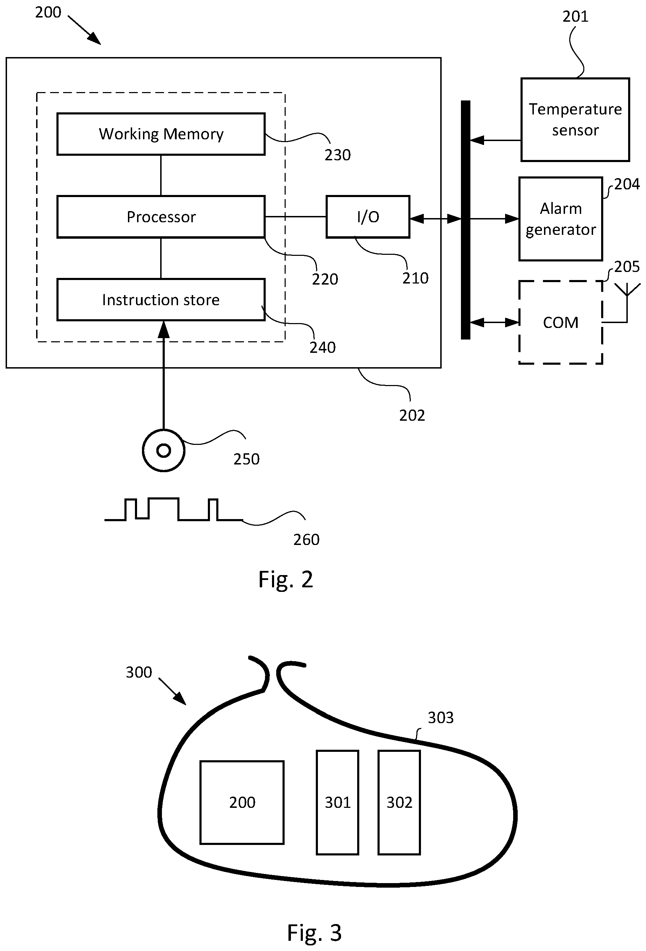

Figure 1 shows a flowchart of the processing operations performed by a signal processing apparatus 202 of Figure 2 for implementing the above method for temperature monitoring of at least one packaged pharmaceutical .

Referring to Figure 1, at step S10 an ambient temperature, T, is measured.

At step S20 an estimated temperature T' is calculated for each packaged pharmaceutical using a thermal model. The thermal model calculates the estimated temperature T' for each packaged pharmaceutical based on physical and thermal properties of the pharmaceutical and and a package of the pharmaceutical, and the measured ambient temperature T.

At step S30, it is determined, for each of the at least one packaged pharmaceutical, if the estimated temperature T' of the packaged pharmaceutical is within an allowed temperature range of the packaged pharmaceutical.

At step S40, an alarm signal is generated in response to determining that the estimated temperature T' of one or more of the at least one packaged pharmaceuticals is outside its allowed temperature range.

Optionally, the method further comprises a step S60 in which an allowed temperature range is determined for each of the pharmaceuticals.

Optionally, the method further comprises, an initial step S60 of waiting a predetermined time before measuring the ambient temperature T. This way it is assured that the temperature of the packaged pharmaceutical is the same as the ambient temperature.

Optionally, the physical properties comprises: a mass of the pharmaceutical, M1, and a mass of its package, M2; and dimensions of the package; and the thermal properties comprises specific heat capacity for the pharmaceutical, CP1, and its package, CP2; and convective heat transfer coefficient, H.

Optionally, the thermal model calculates the estimated temperature $T_i'$ as:

$$T_i' = T_{i-1}' + (H * A * (T − T_{i-1}') / ((M2 * CP2) + (M1 * CP1))) * dt,$$

where dt is the elapsed time from the last calculation of the estimated temperature $T_{i-1}'$.

Optionally, the method further comprises, receiving the thermal and/or the physical properties from a server.

Figure 2 depicts a top-level block diagram of a monitoring device 200 for temperature monitoring of at least one packaged pharmaceutical 301, 302 in a container 303 as illustrated in Figure 3.

The monitoring device 200 comprises a temperature sensor 201 operable to measure an ambient temperature, T, an alarm generator 204 for issuing an alarm in response to receiving an alarm signal.

The monitoring device further comprises a signal processing apparatus 202 operable to calculate an estimated temperature T' for each packaged pharmaceutical by a thermal model. The thermal model calculates the estimated temperature T' for each packaged pharmaceutical based on physical and thermal properties of the corresponding pharmaceutical and its package and the measured ambient temperature.

The signal processing apparatus is further operable to determine if any one of the at least one packaged pharmaceutical is outside its allowed temperature interval based on the corresponding calculated estimated temperature T', and generating the alarm signal in response to determining that one of the at least one packaged pharmaceuticals is outside its allowed temperature interval.

Optionally, the signal processing apparatus 202 further is configured to determine an allowed temperature interval for each of the pharmaceuticals.

Optionally, the signal processing apparatus 202 further is configured to wait at least a predetermined time after start before measuring the ambient temperature.

Optionally, the physical properties comprises: mass of the pharmaceutical, M1, and the mass of its package, M2; and dimensions and area of the package, A; and wherein the thermal properties comprises: specific heat capacity for the pharmaceutical, CP1, and its package, CP2; and convective heat transfer coefficient, H.

Optionally, the thermal model calculates the estimated temperature $T_i'$ as:

$$T_i' = T_{i-1}' + (H * A * (T − T_{i-1}') / ((M2 * CP2) + (M1 * CP1))) * dt,$$

where dt is the elapsed time from the last calculation of the estimated temperature $T_{i-1}'$.

Optionally, the monitoring device further comprises, a communication circuit 205, wherein the thermal and/or the physical properties are received from a wireless network via said communication circuit.

The invention also concerns a computer program comprising computer-readable instructions which, when executed by a processor 220, cause the processor to perform the method according to embodiments disclosed herein.

A computer readable storage medium 250, wherein the computer readable storage medium stores the computer program herein disclosed.

Figure 2 shows an exemplary implementation of the signal processing hardware 202. The signal processing apparatus 200 shown in Figure 2 comprises an input/output (I/O) section 210 for receiving the measured ambient temperature from the temperature sensor 201 and for sending the alarm signal to the alarm generator 204.

Optionally, the I/O section is in communication with a communication circuit 205 for receiving and sending information related to the monitoring and the thermal model.

The signal processing apparatus 200 further comprises a processor 220, a working memory 230 and an instruction store 240 storing computer-readable instructions which, when executed by the processor 220, cause the processor 220 to perform the processing operations described herein above. The instruction store 240 may comprise a ROM which is pre-loaded with the computer-readable instructions. Alternatively, the instruction store 240 may comprise a RAM or similar type of memory, and the computer readable instructions can be input thereto from a computer program product, such as a computer-readable storage medium 250 such as a portable memory stick, etc. or a computer-readable signal 260 carrying the computer-readable instructions.

In the present embodiment, the combination 270 of the hardware components shown in Figure 2, comprising the processor 220, the working memory 230 and the instruction store 240, is configured to implement the functionality of the aforementioned method, which has been described in detail with reference to Figure 1.

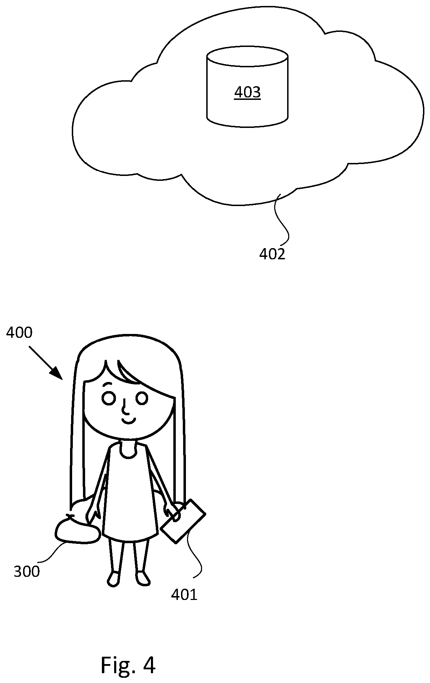

A use case of the present invention will now be described by means of a scenario illustrated in Figure 4.

Referring to Figure 4, a user 400, which may for example be a diabetic person, carries a container 300, 203, which in this embodiment is a bag, containing insulin cartridges 301-302 and a monitoring device 200 according to embodiments herein. The user takes the insulin cartridges and places them together with the monitoring device 200 in the bag and places the bag in a refrigerator. The monitoring device waits a predetermined time for temperature equalization in the bag, wherein the insulin cartridges will have the same temperature in the bag as sensed with the temperature sensor for the ambient temperature in the bag. The user then takes the bag out of the refrigerator and takes a walk outside, the bag gradually heats up and the ambient temperature increases in the bag. The monitoring device estimates the temperature of the insulin in the cartridges using the thermal model and information about the cartridges (for example area and heat capacity).

The monitoring device 200 is in communication with a mobile phone 401 using for example Bluetooth. This way the monitoring device may obtain information about the pharmaceutical and the package from a server 403 via a cloud 402.

The monitoring device generates an alarm signal when it is detected that the estimated temperature T' is outside its allowed range. The alarm signal may trigger an alert signal such as a sound from the monitoring device itself. It is also possible that the mobile phone has a corresponding app that issues an alarm when the alarm signal is received from the monitoring device via the communication circuit.

The disclosure relates to a method for temperature monitoring of at least one packaged pharmaceutical , the method comprising: measuring an ambient temperature, T; calculating an estimated temperature T' for each packaged pharmaceutical using a thermal model, wherein the thermal model calculates the estimated temperature T' for each packaged pharmaceutical based on physical and thermal properties of the pharmaceutical and and a package of the pharmaceutical , and the measured ambient temperature T; determining, for each of the at least one packaged pharmaceutical, if the estimated temperature T' of the packaged pharmaceutical is within an allowed temperature range of the packaged pharmaceutical; and generating an alarm signal in response to determining that the estimated temperature T' of one or more of the at least one packaged pharmaceuticals is outside its allowed temperature range.

According to some embodiments, the method further comprises, determining an allowed temperature range for each of the pharmaceuticals.

According to some embodiments, the method further comprises, an initial step of waiting a predetermined time before measuring the ambient temperature T.

According to some embodiments, the physical properties comprises: a mass of the pharmaceutical, M1, and a mass of its package, M2; and dimensions of the package; and the thermal properties comprises specific heat capacity for the pharmaceutical, CP1, and its package, CP2; and convective heat transfer coefficient, H.

According to some embodiments, the thermal model calculates the estimated temperature $T_i'$ as:

$$T_i' = T_{i-1}' + (H * A * (T - T_{i-1}')) / ((M2 * CP2) + (M1 * CP1))) * dt,$$

where dt is the elapsed time from the last calculation of the estimated temperature $T_{i-1}'$.

According to some embodiments, the method further comprises, receiving the thermal and/or the physical properties from a server.

The disclosure also relates to a monitoring device for temperature monitoring of at least one packaged pharmaceutical , wherein the monitoring device comprises: a temperature sensor operable to measure an ambient temperature, T; an alarm generator for issuing an alarm in response to receiving an alarm signal; a signal processing apparatus operable to: calculate an estimated temperature T' for each packaged pharmaceutical by a thermal model, wherein the thermal model calculates the estimated temperature T' for each packaged pharmaceutical based on physical and thermal properties of the corresponding pharmaceutical and its package and the measured ambient temperature; determine if any one of the at least one packaged pharmaceutical is outside its allowed temperature interval based on the corresponding calculated estimated temperature T'; and generating the alarm signal in response to determining that one of the at least one packaged pharmaceuticals is outside its allowed temperature interval.

According to some embodiments, the signal processing apparatus further is configured to: determine an allowed temperature interval for each of the pharmaceuticals.

According to some embodiments, the signal processing apparatus further is configured to: wait at least a predetermined time after start before measuring the ambient temperature.

According to some embodiments, the physical properties comprises: mass of the pharmaceutical, M1, and the mass of its package, M2; and dimensions and area of the package, A; and wherein the thermal properties comprises: specific heat capacity for the pharmaceutical, CP1, and its package, CP2; and convective heat transfer coefficient, H.

According to some embodiments, the thermal model calculates the estimated temperature $T_i'$ as:

$$T_i' = T_{i-1}' + (H * A * (T - T_{i-1}') / ((M2 * CP2) + (M1 * CP1))) * dt,$$

where dt is the elapsed time from the last calculation of the estimated temperature $T_{i-1}'$.

According to some embodiments, the monitoring device further comprises, a communication circuit, wherein the thermal and/or the physical properties are received from a wireless network via said communication circuit.

The disclosure also relates to a computer program comprising computer-readable instructions which, when executed by a processor, cause the processor to perform the method according to embodiments.

The disclosure also relates to a computer readable storage medium, wherein the computer readable storage medium stores the computer program of this disclosure.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the embodiments being defined by the following claims.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems, and computer program products.

It should be appreciated that the example embodiments presented herein may be practiced in any combination with each other. It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

## Claims

1. A method (400) for temperature monitoring of at least one packaged pharmaceutical, the method comprising:

    measuring (S10) an ambient temperature, T;
    calculating (S20) an estimated temperature T' for each packaged pharmaceutical using a thermal model, wherein the thermal model calculates the estimated temperature T' for each packaged pharmaceutical based on physical and thermal properties of the pharmaceutical and and a package of the pharmaceutical, and the measured ambient temperature T;

determining (S30), for each of the at least one packaged pharmaceutical, if the estimated temperature T' of the packaged pharmaceutical is within an allowed temperature range of the packaged pharmaceutical; and generating (S40) an alarm signal in response to determining that the estimated temperature T' of one or more of the at least one packaged pharmaceuticals is outside its allowed temperature range.

2. The method according to claim 1, wherein: the method further comprises, determining (S60) an allowed temperature range for each of the pharmaceuticals.

3. The method (400) according to claim 1 or 2, wherein: the method further comprises, an initial step of waiting (S50) a predetermined time before measuring the ambient temperature T.

4. The method (400) according to any one of claim 1 to 3, wherein the physical properties comprises: a mass of the pharmaceutical, M1, and a mass of its package, M2; and dimensions of the package; and the thermal properties comprises specific heat capacity for the pharmaceutical, CP1, and its package, CP2; and convective heat transfer coefficient, H.

5. The method (400) according to claim 4, wherein the thermal model calculates the estimated temperature $T_i'$ as: $T_i' = T_{i-1}' + (H * A * (T - T_{i-1}')) / ((M2 * CP2) + (M1 * CP1))) * dt$, where dt is the elapsed time from the last calculation of the estimated temperature $T_{i-1}'$.

6. The method (400) according to any one of the preceding claims, wherein: the method further comprises, receiving the thermal and/or the physical properties from a server.

7. A monitoring device (100) for temperature monitoring of at least one packaged pharmaceutical (201 202), wherein the monitoring device (100) comprises:

a temperature sensor (101) operable to measure an ambient temperature, T;
an alarm generator (104) for issuing an alarm in response to receiving an alarm signal;
a signal processing apparatus (102) operable to:

calculate an estimated temperature T' for each packaged pharmaceutical by a thermal model, wherein the thermal model calculates the estimated temperature T' for each packaged pharmaceutical based on physical and thermal properties of the corresponding pharmaceutical and its package and the measured ambient temperature;
determine if any one of the at least one packaged pharmaceutical is outside its allowed temperature interval based on the corresponding calculated estimated temperature T'; and
generating the alarm signal in response to determining that one of the at least one packaged pharmaceuticals is outside its allowed temperature interval.

8. The monitoring device according to claim 7, wherein the signal processing apparatus (102) further is configured to: determine an allowed temperature interval for each of the pharmaceuticals.

9. The monitoring device according to claim 7 or 8, wherein the signal processing apparatus (102) further is configured to: wait at least a predetermined time after start before measuring the ambient temperature.

10. The monitoring device according to any one of claim 7 to 9, wherein the physical properties comprises: mass of the pharmaceutical, M1, and the mass of its package, M2; and dimensions and area of the package, A; and wherein the thermal properties comprises: specific heat capacity for the pharmaceutical, CP1, and its package, CP2; and convective heat transfer coefficient, H.

11. The monitoring device according to claim 10, wherein the thermal model calculates the estimated temperature $T_i'$ as: $T_i' = T_{i-1}' + (H * A * (T - T_{i-1}')) / ((M2 * CP2) + (M1 * CP1))) * dt$, where dt is the elapsed time from the last calculation of the estimated temperature $T_{i-1}'$.

12. The monitoring device according to any one of claim 7 to 11, wherein: the monitoring device further comprises, a communication circuit (105), wherein the thermal and/or the physical properties are received from a wireless network via said communication circuit.

**13.** A computer program comprising computer-readable instructions which, when executed by a processor (120), cause the processor to perform the method according to any of the claims 1 to 6.

**14.** A computer readable storage medium (150), wherein the computer readable storage medium stores the computer program of claim 13.

100

wait at least a predetermined time — S50

measuring an ambient temperature, T — S10

calculating an estimated temperature T' for each packaged pharmaceutical by a thermal model — S20

determining an allowed temperature interval for each of the pharmaceuticals — S60

determining if any one of the at least one packaged pharmaceutical is outside its allowed temperature interval — S30

generating an alarm signal, in response to determining that one of the at least one packaged pharmaceuticals is outside its allowed temperature interval — S40

Fig. 1

Fig. 2

Fig. 3

Fig. 4